# EUROPEAN PATENT APPLICATION

(11) **EP 3 106 372 A1**
(43) Date of publication of application: **21.12.2016**
(21) Application number: 15172538.9
(22) Date of filing: 17.06.2015
(51) Int. Cl.: B62D 25/20, B60R 13/01

(54) **A FLOOR PANEL SYSTEM**

(71) Applicant: Modul-System HH AB, 431 22 Mölndal (SE)
(72) Inventor: CARLSSON, Anders, 422 50 HISINGS BACKA (SE)
(74) Representative: Awapatent AB

(57) **Abstract**

A floor panel system (99), adapted to be arranged on an inner floor (4) of a back space or cargo space (2) of a service vehicle (1), wherein said back space or cargo space (2) of said service vehicle (1) comprises at least two side walls (3), said floor panel system (99) comprising: a substantially rectangular main floor panel section (9) comprising at least one main floor panel unit (9'), wherein said main floor panel section (9) is adapted to be arranged on said inner floor (4) at a distance (D) from at least one of said side walls (3) of said back space or cargo space (2) of said service vehicle (1), and a first (5) and a second side panel (6), wherein said first side panel (5) comprises a first (51) and an opposite arranged second lateral side (52), wherein said first lateral side (51) of said first side panel (5) is adapted to be connected to said main floor panel section (9), and said second side panel (6) comprises a first lateral side (61) adapted to be connected to said second lateral side (52) of said first side panel (5), and said first lateral side (61) of said second side panel (6) comprises a first connecting element (64), and said second lateral side (51) of said first side panel (5) comprises a second connecting element (55) matching said first connecting element (64) of said second side panel (6).

## Description

### Field of the Invention

The present invention relates to a floor system, adapted to be arranged on an inner floor of a cargo or a back space of a service vehicle.

### Technical Background

It is common practise in the art of service vehicles to equip a cargo space or a back space of an automotive vehicle with for example cupboards, tool holders, shelves or other module units. This is usually made in a separate step after the vehicle has been manufactured, i.e. the equipping of the vehicle in question is made separately from the manufacturing. Before the vehicle is equipped with specialised equipment, usually the cargo space of the vehicle is provided with a floor, usually made of wood, composites or metals, but the floor might also be made of for example an artificial, plastic material. The floor is usually loosely placed on the inner floor or fastened to the inner floor of the cargo space by fasteners, for example, screws which are screwed into the underlying floor or connected to a fastener, for example a ring fastener which is permanently installed in the cargo or back space of the service vehicle. These floors may function as supports to work, stand and walk upon and may also be used as anchor plate for the module units.

Usually a floor is individually made for a specific vehicle model, i.e. the floor is individually adapted to the length, the width and the wheel arch positions of the vehicle.

It is known in the art of equipping a back space or cargo space of a service vehicle with a major centrally arranged floor panel and to arrange a smaller side portion on one side of the floor panel, i.e. between the centrally arranged floor panel and an inner wall of the cargo space or back space.

The side portion is usually measured and cut into a fitting side portion in a tailor made fashion after each service vehicle. The side portion is usually fastened directly to the sheet metal of the inner floor of the service vehicle by means of self tapping or self threading screws. Such means for fastening the side sections however is problematic since it essentially makes a hole in the sheet metal of the vehicle which increases the risk for corrosion or rust which may reduce the structural integrity of the chassis of the service vehicle. This kind of flooring systems are also timely and costly to produce and install since the side portion or, if several side portions are used to cover different areas between the centrally arranged floor panel and an inner wall of the cargo space or back space, for example on each side of the floor panel, each side portion must be tailored after individual vehicle models that are to be floored.

One example is shown in EP 1 894 774.

Hence, there is a need for a more flexible solution which can be used for most kinds of back spaces and cargo spaces of a service vehicle and which is easy and quick to install.

### Summary of the Invention

The object of the present invention is to provide a floor system that overcomes the above issues.

The invention is based on the insight that by having a floor panel system comprising a main floor panel section and side panel sections connected to the main floor panel section a floor which covers the whole inner floor of the back space or cargo space can be created in an easy way.

According to a first aspect, the invention relates to a floor panel system, adapted to be arranged on an inner floor of a back space or cargo space of a service vehicle, wherein said back space or cargo space of said service vehicle comprises at least two side walls, said floor panel system comprising: a substantially rectangular main floor panel section comprising at least one main floor panel unit, wherein said main floor panel section is adapted to be arranged on said inner floor at a distance from at least one of said side walls of said back space or cargo space of said service vehicle, and a first and a second side panel, wherein said first side panel comprises a first and an opposite arranged second lateral side, wherein said first lateral side of said first side panel is adapted to be connected to said main floor panel section, and said second side panel comprises a first lateral side adapted to be connected to said second lateral side of said first side panel, and said first lateral side of said second side panel comprises a first connecting element, and said second side of said first side panel comprises a second connecting element matching said first connecting element of said second side panel.

By having side panels connected to each other and having the first side panel connected to the main floor panel section a modular floor panel system is accomplished. The first and the second side panel may have different widths or the same widths enabling the floor panel system to cover an area of the inner floor of the back space or cargo space of the service vehicle of different size, which is not covered by the main floor panel section. The floor panel system is not limited to only two side panels, there may be more than two. The main floor panel section is substantially rectangular and it is adapted to cover as much of the area of the inner floor of the back space or cargo space defined by the distance between, for instance, the wheel houses, and the length of the back space or cargo space of the service vehicle. The main floor panel section may however have rounded corners or may comprises recesses such that the shape of the main floor panel section is not exactly shaped as a rectangle.

The main floor panel section comprises at least one floor panel. Hence, the main floor panel section may be one large floor panel, or comprise several smaller floor panels which together form the main floor panel section. It is advantageously to use several floor panels to form the main floor panel section since they can be use in many different sized back spaces or cargo spaces of different modeled service vehicles. The floor panels thus may be manufactured in a few, predefined, sizes in order to best fit as much area as possible of as many different vehicles as possible. The main floor panel section is adapted to be arranged a distance from at least one side wall of the back space or cargo space of the service vehicle. Hence, between the side walls of the cargo space or back space and the main floor panel section an area which is not covered by the main floor panel section is accomplished, and the side panels are adapted to cover this area during use. A suitable number of side panels, however at least two, can be chosen dependent on the size of the area they have to cover.

The first lateral side of the first side panel is connected to the main floor panel section. It may be connected by matching connecting elements. The main floor panel section may comprise at least one securing rail which is arranged along one of the lateral sides. The first side panel may hence be connected to the securing rail during use. However the first side panel may be connected directly to a floor panel. The securing rail of the main floor panel section and the first side panel may hence comprise matching connecting elements. A floor panel arranged with at least one securing rail may form a main floor panel unit.

The second side panel is adapted connected to the first side panel by matching connecting elements. The second side panel hence comprises a first connecting element at its first lateral side. The first lateral side faces the main floor panel section when in use. The first side panel comprises a second matching connecting element on its second lateral side. By matching connecting elements many different implementations of connecting elements are possible. For instance such connecting elements may be of a groove and tongue type, a snap-lock type or any other securely connection type suitable for the application of the floor panel system.

The side panels and the main floor panel section may be manufactured in a polymer material such as a plastic. Depending on the application the material may also be a fibre-reinforced polymer, a foamed polymer, a polymer comprising a matrix structure or a polymer where light weight spherical filler have been added to the polymer, a laminated polymer or a composite. They may also be made of wood or any other suitable material. The side panels may also be made in metal such as formed sheet metal or an extruded metal such as aluminium. The side panels may have a length being essentially equal to the length of the back space or cargo space of the service vehicle, or may have a length which is shorter. When the side panels have a shorter length the side panels may be packed and shipped on a pallet. This enables for simple, environmentally friendly and cost efficient shipping of the floor panel system. The side panels may also have an initial length which is longer than the main floor panel section, and the side panels may hence be cut into a suitable length during assembly. The size of the floor panels if several are used to form the main floor panel section may be such that they may be stacked on top of each other, and on a pallet when being transported. Such pallet systems may be i.e. the EUR, or EPAL system, or another ISO-pallet system. The side panel may also be of a size such that they may be stacked, and shipped on a pallet together with the main floor panel section, or floor panels making up the main floor panel section, and other parts such as fastening elements or fastening rails, used by the floor panel system.

In order to better fit around along the side walls of the back space or cargo space of the service vehicle, such as the wheel houses, the side panels may be cut down into shorter lengths, in order to better fit the area of the inner floor to be floored. By cutting the side panels down to shorter lengths and not cutting the side panels such that the fit snuggly around for instance the wheel houses, unnecessary wasting of side panel material may be achieved. The floor panel system may, apart from fit in a back space or cargo space of a service vehicle, also fit on a truck bed or a flat bed of a vehicle. The first side panel may be connected to any part of the main floor panel section.

According to at least one exemplary embodiment the first connecting element comprises a locking protrusion, protruding outwardly from, and extending at least partly along said first lateral side of said second side panel, adjacent a top surface, and wherein said second connecting element comprises a locking protrusion, protruding outwardly from, and extending at least partly along said second lateral side of said first side panel, adjacent a bottom surface of said first side panel.

According to at least one exemplary embodiment the first connecting element comprises a locking protrusion, protruding outwardly from, and extending at least partly along said first lateral side of said second side panel, adjacent a bottom surface, and wherein said second connecting element comprises a locking protrusion, protruding outwardly from, and extending at least partly along said second lateral side of said first side panel, adjacent a top surface of said first side panel.

Having the first and the second connection element each comprising at least one protrusion, protruding outwardly and extending at least partly along a lateral side of a side panel either close to the top surface or the bottom surface of the respective side panels is advantageous since it enables the connection between the side panels to be along the lateral sides of the side panels. Forces acting on the connection elements, trying to pull the connection apart, will be spread over a larger portion of the side panels which decreases the risk of localized stress concentration zones in the structure of the side panels, which increases the risk for failures of the material in said localized stress concentration zones. The connection elements may be made as a portion of the side panel or as a separate part attached to the lateral side of the side panel. By making it as a separate part the connection elements may have a shape which may be difficult to produce in the same manufacturing method that the side panel is manufacture in. Having the connecting elements made as a separate part further enables the connecting elements to be made in a different material from the material of the side panels.

According to at least one exemplary embodiment a width of said first and said second side panel is the same or different. This is advantageous since it may increase the modularity of the floor panel system. Dependent on the width of the area which has to be covered by the side panels, side panels having the same width or different width can be chosen. Depending on the exact width of the area which has to be covered this may enable the use of two side panels, each having a larger width, instead of three side panels, each having a smaller widths in order to cover the inner floor. Accordingly when the area to be floored is smaller, one side panel with a larger width and one side panel with a smaller width may be used.

The side panels may be parts of a flooring kit, wherein the kit may comprise different amounts of first, second and third side panels.

According to at least one exemplary embodiment the area of the inner floor, of said back space or cargo space of said service vehicle, adapted to be covered by said substantially rectangular main floor panel section is larger than the area of said inner floor not being covered by said main floor panel section. This enables that a larger part of the inner floor of the back space or cargo space is covered by the main floor panel section, and the rest may be covered by the side panels during use. This may enable fewer parts to be used for flooring the back space or cargo space of the service vehicle, which reduces the cost for equipping the service vehicle.

According to at least one exemplary embodiment the floor panel system further comprises an edge covering panel, adapted to be connected to said second lateral side of said second floor panel or to a further side panel which is connected to said second lateral side of said second side panel. Having an edge covering panel is advantageous since the gap between a side panel and a side wall may be covered, or bridged, by the edge covering panel. The edge covering panel may also be connected directly to the main floor panel section. The edge covering panel may be a panel having a width equal to one of the other side panels of the floor panel system, or may be in the shape of an edge strip that may be arranged to a side panel by adhesives. Thus the edge strip may be integrated to a side panel.

According to at least one exemplary embodiment said floor panel system further comprises an edge covering rail, adapted to be connected to said second edge of said second floor panel or to a further side panel which is connected to said second side of said second side panel. If the gap to be covered is small an edge covering rail can be used instead of an edge covering panel.

According to at least one exemplary embodiment said second side panel is an edge covering panel. This may be advantageous when the first side panel takes up a large area of the area to be covered. The edge covering panel, which is the second side panel, may be used for covering the gap between a first side panel and a wheel house of the back space or cargo space of the service vehicle.

According to at least one exemplary embodiment said edge covering panel comprises a body portion comprising a first connecting element, and a flexible portion, said flexible portion being adapted to be in contact with said inner floor, a wheel house, or said one side wall of said back space or cargo space of said service vehicle. The edge covering panel may comprise a connecting element such that the edge covering panel may be connected to a matching connecting element of a side panel or the main floor panel section.

The flexible portion may be a flexible tongue, which extends along the extension of the body portion. By having the edge covering panel comprising two separate portions the two portions may be made from different materials. For instance the flexible portion may be made in a flexible material such as an elastomer, a rubber, a silicone based material or plastic. The properties of the flexible portion enable the same edge covering panel to be able to be used for contact against a side wall or the inner floor of the service vehicle. The flexible portion may also be made from two or more materials joined together such that a pivotable function is achieved where the materials overlap. The flexible portion may also be connected or joined to the body portion of the edge covering panel by a pivotable point such that the flexible portion may be pivoted around the body portion of the edge covering panel. The flexible portion may extend in an angle to a top surface of the edge covering panel towards a bottom surface of the edge covering portion. The top surface is the surface which is adapted to face the inner area of the back space or cargo space during use. The bottom surface is the surface which is adapted to face the inner floor of the back space or cargo space during use.

The flexible portion may be made having a length which is longer than the height or the width of the body portion of the edge covering panel. This increases the ability of the edge covering panel to cover larger gaps between the inner floor or the side walls of the service vehicle. The above also may apply for an edge covering rail.

According to at least one exemplary embodiment said first and second side panels are made from a polymer material, such as a plastic. It is advantageous when the side panels are made in a polymer material, since polymer material such as plastic, have a high material strength in relation to weight. Decreasing the weight of the floor panel system decreases the energy consumption of a service vehicle which in turn saves cost and is environmentally more friendly than other floor panel systems.

According to at least one exemplary embodiment the first and second side panels,and said edge covering panel, are made from a polymer material, such as a plastic. The edge covering panel may also be made from a plastic material. The material may be the same as the material of the first and second side panels or a plastic material being more flexible than the material of the first and second side panels.

According to at least one exemplary embodiment the flexible portion of said edge covering panel is made from an elastomer, such as rubber. The edge covering panel comprises a flexible portion made from an elastomer such as rubber. This gives flexible properties to the edge covering panel such that the edge covering panel may be arranged to bridge the gap between the edge covering panel and the side walls, the rear wheel houses or the gap to the inner floor of the back space or cargo space of the service vehicle. Elastomeric materials also help to minimize vibrations between the edge covering panel between the edge covering panel and the side walls, the rear wheel houses or the gap to the inner floor.

According to at least one exemplary embodiment the body portion of said edge covering panel and/or said flexible portion of said edge covering panel is made from an elastomer, such as rubber. The body portion of the edge covering panel may also be made from a flexible material.

According to at least one exemplary embodiment the side panels have a length equal to the length of a main floor panel unit 9'. The length of the side panels may be equal to the length of a main floor panel unit. This enables the side panels to be stacked and transported together with the main floor panel units of the floor panel system. However the length of the side panels may also be longer or shorter than the length of a main floor panel unit.

According to a second aspect of the present invention relates to a service vehicle comprising a floor panel system described above. It is advantageous to equip a service vehicle with a floor panel system according to an embodiment of the present invention

### Brief Description of the Drawings

The above, as well as additional objects, features and advantages of the present invention, will be better understood through the following illustrative and non-limiting detailed description of exemplary embodiments of the present invention, with reference to the appended drawings, where the same reference numerals will be used for similar elements, wherein:
Fig. 1 shows a back space or cargo space of a service vehicle comprising a floor panel system, according to the invention, arranged on the inner floor of said back space or cargo space of the service vehicle, as well as an exploded view of a part of the floor panel system.
Fig. 2 shows a partial view of the back space or cargo space of a service vehicle comprising an exploded view of the floor panel system in Fig. 1.
Fig. 3 shows a top view of the back space or cargo space and the floor panel system in Fig. 1 and Fig. 2 arranged on the inner floor of the back space or cargo space of a service vehicle.
Fig. 4 shows cross-section A-A of the floor panel system in Fig. 3 with a partially enlarged and exploded view of a connection between two floor panels.

All the figures are highly schematic, not necessarily to scale, and they show only parts which are necessary in order to elucidate the invention, other parts being omitted or merely suggested.

### Detailed Description of the Invention

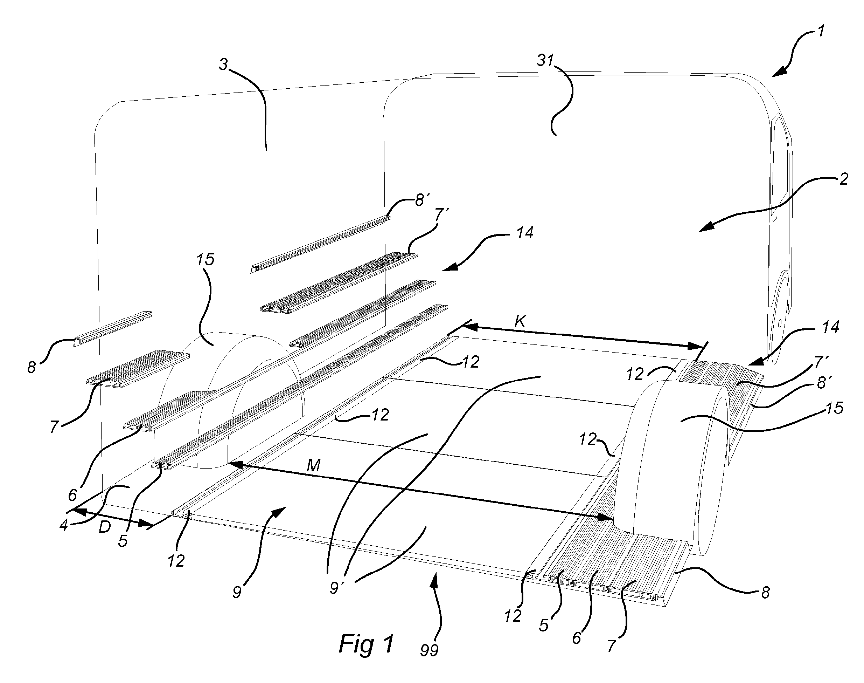

Fig. 1 shows a back space or cargo space 2 of a service vehicle 1. Such a vehicle 1 is widely used for transporting equipment and tools (Not shown). The back space or cargo space 2 of the service vehicle 1 comprises inner side walls 3, an inner floor 4 and an inner ceiling (not shown) as well as a rear door (not shown). The inner floor 4 of the back space or cargo space 2 of the service vehicle 1 is covered by a floor panel system 99 comprising a main floor panel section 9 and on two opposing sides of the main floor panel section 9, side panel sections 14 connected to the main floor panel section 9. The side panel sections 14 comprise side panels 5, 6, 7, 7'. On one side of the main floor panel section 9, the side panel section 14 is shown in an exploded state, wherein the side panels 5, 6, 7, 7' are moved apart, in relation to their assembled state, to better visualize the side panel section 14.

The main floor panel section 9 and the side panel sections 14 thus cover substantially the whole inner floor 4 of the back space or cargo space 2 of the service vehicle 1. The main floor panel section 9 is arranged at a distance D from one side wall 3, which is in the driving direction of the vehicle 1, of the back space or cargo space 2 of the service vehicle 1. The main floor panel section 9 has a width K, transverse the driving direction of the vehicle 1, chosen so that the main floor panel section 9 at least fit between the two rear wheel houses 15 of the service vehicle 1. In the driving direction of the vehicle the main floor panel section extends between the front wall 31, which is between the back space or cargo space 2 and the passenger/driver compartment (not shown), and the rear opening (not shown) of the back space or cargo space 2 of the service vehicle 1.

The main floor panel section 9 comprises three interconnected main floor panel units 9'. Each main floor panel unit 9' comprises a floor panel 13 and elongated securing rails 12, arranged on opposite sides of said floor panel 13. The elongated securing rails 12 may be used for securing cargo, module units or other tools or equipment (not shown) to the back space or cargo space 2 of the service vehicle 1. The elongated securing rails 12 may have a length being shorter or the same as the length of a floor panel 13. The length of the elongated securing rails 12 may also be longer than the length of a floor panel 13, such that one elongated securing rail 12 may be arranged to, and connect, two or more floor panels 13.

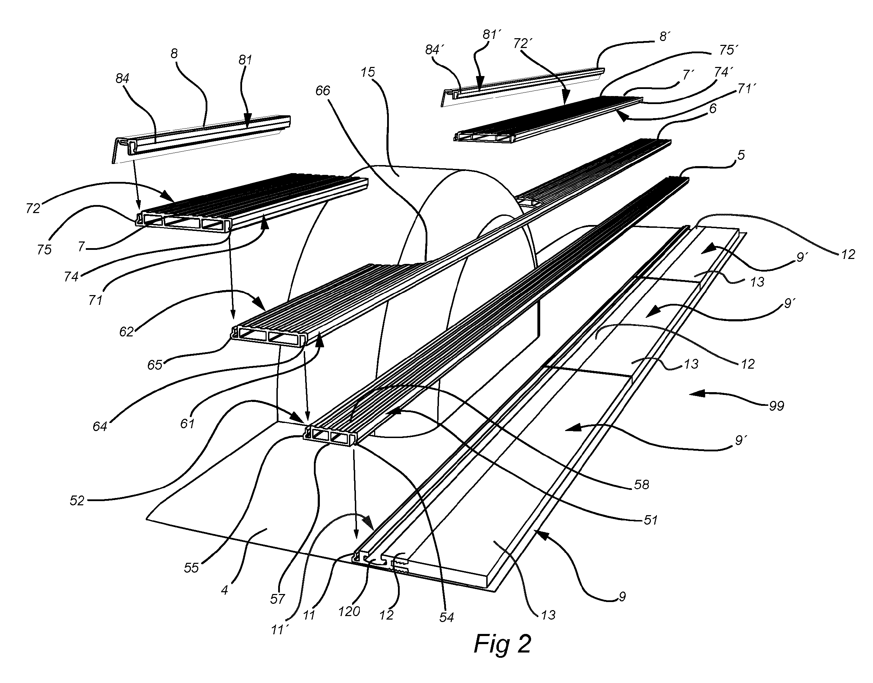

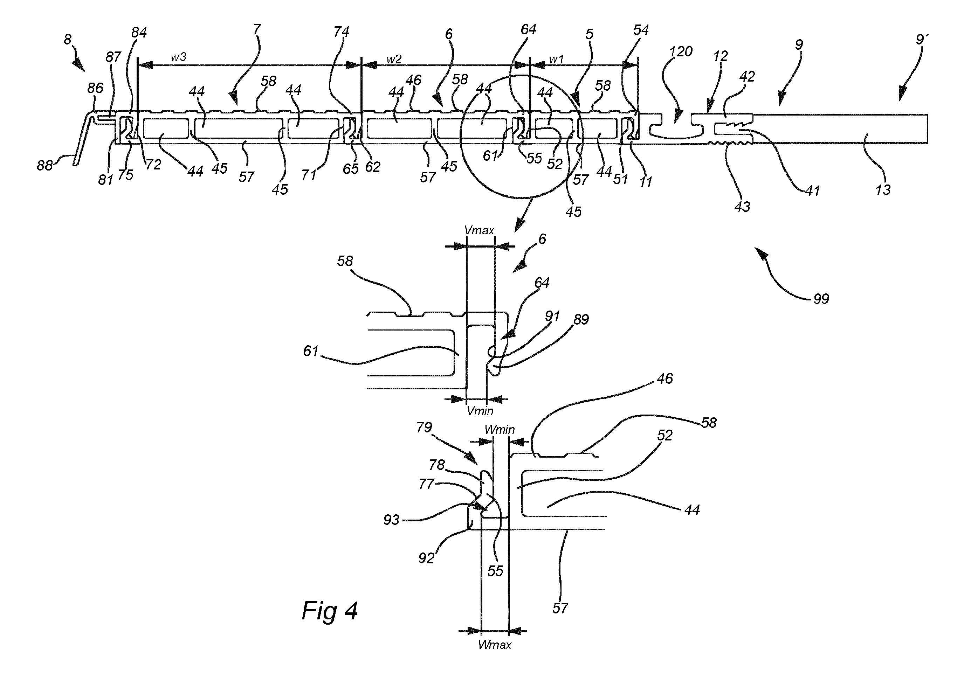

Connected to the elongated securing rails 12 of the main floor panel section 9 are side panels 5, 6, 7. The side panels 5, 6, 7 are connected to each other by matching connecting elements arranged along their lateral sides. Since the side panels are similar on both sides of the main floor panel section 9, only one side will be described. A first side panel 5 is connected by connecting elements which are shown in Fig. 4 to the elongated securing rail 12. Connected to the first side panel 5 is a second side panel 6 and connected to the second side panel 6 is a first third side panel 7 and a second third side panel 7'. The side panels 5, 6, 7, 7' in Fig. 1 have different widths. The second and the first and second third side panel 6, 7, 7' have been cut to fit around the rear wheel wells 15 of the service vehicle 1. The first and second third side panel 7, 7'each have a length being shorter than the length of either the first or second side panel 5, 6. The side panels share the design of the connecting elements such that a first side panel 5 may be interchanged with a second or a first or second third side panel 6, 7, 7'. The second side panel 6 may also be cut into two portions as said third side pane 7, 7'. The side panels 5, 6, 7 form a side panel section 14 covering the inner floor 4 of the back space or cargo space 2 of the service vehicle 1 that is not covered by the main floor panel section 9. The area of the two side panel sections is smaller than the area of the main floor panel section 9. Connected to the third side panel 7, 7' is an edge covering panel 8, 8'. The edge covering panels 8, 8' are of the same design but of different lengths, each edge covering panel 8,8 comprises a connecting element 84, see Fig. 2, connecting the edge covering panel 8 to the third side panel 7, and a flexible portion 88 (see Fig. 2) arranged to be in contact with the inner floor 4 or, a rear wheel house 15 or the inner wall 3 of the back space or cargo space 2 of the service vehicle 1.

The inner floor 4 of the service vehicle 1 is largely covered by the main floor panel section 9, with the side panel section 14 covering the portions of the inner floor 4 not covered by the main floor panel section 9. Thus the area covered by the main floor panel section 9 is larger than the area covered by the side panel sections 14.

Fig. 2 shows an enlarged, exploded view of the floor panel system 99 in Fig. 1 comprising a plurality of side panels 5, 6, 7, 7' connected to the three main floor panel units 9', which together form the main floor panel section 9. The elongated securing rails 12 of the main floor panel units 9' are fastened to the inner floor 4 of the back space or cargo space 2 of the service vehicle 1 by adhesives. The elongated securing rails 12 comprise an undercut groove 120 adapted for fastening equipment to the elongated securing rail 12. The elongated securing rail 12 may be used for fastening equipment and for fastening the side panels 5, 6, 7 to the main floor panel section 9. However the elongated securing rails 12 may be absent and the side panels 5, 6, 7 may instead be connected directly to the floor panels 13 of the main floor panel units 9' of the main floor panel section 9. The main floor panel section 9 may then be directly attached to the inner floor 4 of the back space or cargo space 2 of the service vehicle 1 by, for example, adhesives. Each elongated securing rail 12 comprises, on a lateral side 11', said lateral side 11' facing away from the main floor panel section 9, a connecting element 11. The connecting element 11 is used for connecting a side panel 5, 6, 7 to the elongated securing rails 12.

The first, the second, the first third and the second third side panel 5, 6, 7, 7', each comprising a first lateral side 51, 61, 71, 71' and a second lateral side, 52, 62, 72, 72'. The first and the second lateral side 51, 61, 71, 71', 52, 62, 72, 72' are arranged opposite each other. The first lateral side 51, 61, 71, 71' of a side panel 5, 6, 7, 7' is arranged to be facing towards the main floor panel section 9 when the side panel 5, 6, 7, 7' is arranged to the inner floor 4 of the back space or cargo space 2 of the service vehicle 1. The first lateral side 51, 61, 71, 71' comprises first connecting elements 54, 64, 74, 74' and the second lateral side 52, 62, 72, 72' of the side panels 5, 6, 7, 7' comprises second connecting elements 55, 65, 75, 75'. The connecting elements 11 of the elongated securing rails, the first connecting elements 54, 64, 74, 74' of the first lateral side 51, 61, 71, 71' of the side panels 5, 6, 7, 7' and the second connecting elements 55, 65, 75, 75' of the second lateral side 52, 62, 72, 72' of the side panels 5, 6, 7, 7' are described in connection with Fig. 4.

Connected to the first third and the second third side panels 7, 7' are edge covering panels 8, 8'. Each edge covering panels 8, 8' has a first side 81, 81'. The first side 81, 81' of each edge covering panel 8, 8' comprises a first connecting element 84, 84' for connecting the edge covering panel 8, 8' to the two third side panels 7, 7'. Alternatively, the edge covering panels 8, 8' may also be connected to any of the other side panels 5, 6, an elongated securing rail 12 or a floor panel 13 of the main floor panel section 9. The connecting elements of all side panels are designed such that the first connecting element 54, 64, 74, 74', 84, 84' of one side panel 5, 6, 7, 7' is connectable to a second connecting elements 55, 65, 75, 75' of another side panel5, 6, 7, 7'. Hence, the connecting elements are matching each other. This will is further described in connection with Fig. 4. This provides modularity to the floor panel system, by each side panel 5, 6, 7 is being adapted to be replaced by another side panel. For instance the first side panel 5 may be replaced by a second or third side panel 6, 7, or vice versa. The difference between the first, the second and the third side panel 5, 6, 7 shown in Fig. 1 except for the length, is the width of the side panels 5, 6, 7. They are exemplified as having different widths. However, the first side panel 5 may have the same width as the second side panel 6 or the third side panel 7 and vice versa.

Perpendicular to the first and second lateral side of a side panel 5, 6, 7, 7' is a bottom and a top surface 57, 58. The bottom surface 57 is arranged to be facing the inner floor 4 of the back space or cargo space 2 of the service vehicle 1 when the service vehicle 1 has been floored, i.e. is in use. The top surface 58 is arranged opposite the bottom surface 57 of each side panel 5, 6, 7 and is arranged to be facing inwards towards the inner volume of the back space or cargo space 2 of the service vehicle 1. The bottom surface 57 of a side panel 5, 6, 7 is placed on the inner surface 4 of the service vehicle 1 or is adhered to the inner floor 4 (not shown). The second side panel 6 has a cut out 66 where a partial part of the second side panel 6 has been removed so that the side panel 6 is partly shaped and fit around the rear wheel well 15 of the service vehicle 1.

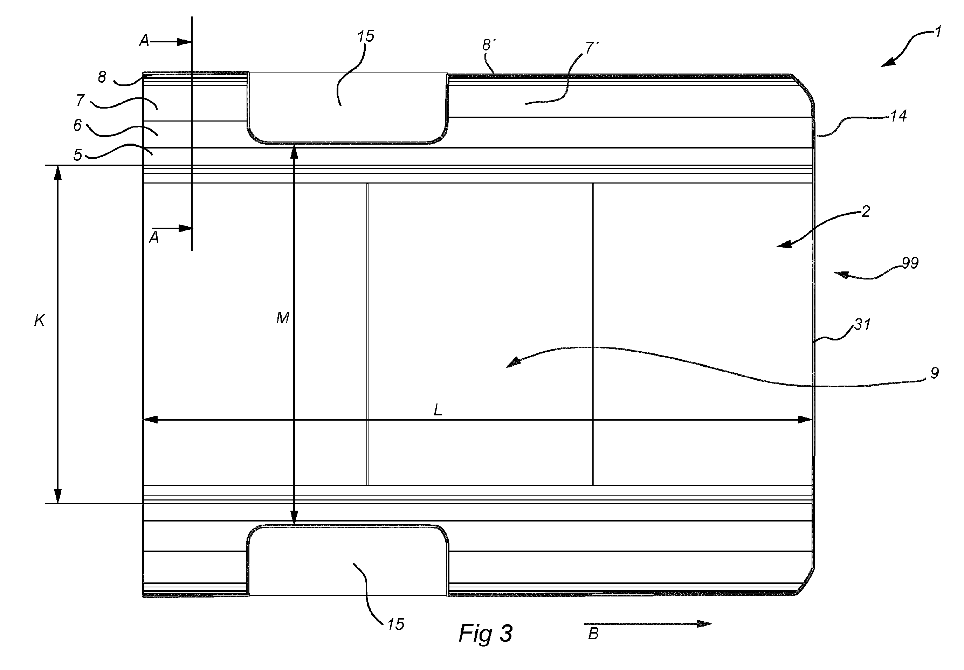

Fig. 3 shows a top down view of the back space or cargo space 2 comprising the floor panel system 99 in Fig. 1 and Fig. 2. The floor panel system 99 comprises the main floor panel section 9 arranged between the wheel houses 15 of the service vehicle 1 and between the front wall 31, which is between the back space or cargo space 2 and the passenger/driver compartment (not shown), and the rear opening (not shown) of the back space or cargo space 2 of the service vehicle 1. The main floor panel section 9 fills a major part of the area of the inner floor 4. The area of the main floor panel section 9 is thus larger than, or equal to, the area on which two side panel sections 14 are arranged. The width K of the main floor panel section 9 is chosen such that the main floor panel section 9 fits between the wheel houses 15, which are arranged at a distance M from each other perpendicular to the driving direction of the vehicle. The main floor panel section 9 has an extension in the driving direction arrow B of the vehicle which is defined by the length L. The area which the main floor panel section 9 takes up is substantially a rectangle comprising sides of length L being essentially the same or smaller than the extension of the back space or cargo space 2 in the driving direction of the vehicle 1 and sides with a width K being essentially the same or smaller than the distance M between the wheel houses 15. Side panels 5, 6, 7, 7' and edge covering panels 8, 8' are arranged and connected to the main floor panel section 9, as described in connection with Figs. 1, 3 and 4.

Fig. 4 shows cross-sectional view A-A of the floor panel system 99 in Fig. 3 without the inner floor 4 of the back space or cargo space 2. Shown is a portion of the main floor panel section 9 comprising the main floor panel unit 9'. The main floor panel unit 9' comprises the floor panel 13 and the elongated securing rail 12. The connection between the elongated securing rail 12 and the floor panel 13 is made by a connecting protrusion 41 on the floor panel 13, which is being press-fitted or interference fitted against a connection groove 42 of the elongated securing rail 12. The floor panel 13 may be made from a polymer material. The elongated securing rail 12 may be made in aluminium, aluminium alloy, polymer or a fibre reinforced polymer material. Connected to the elongated securing rail 12, on an opposing side from the side where the elongated securing rail 12 is connected to the main floor panel unit 9', is the first side panel 5. To the first side panel 5 is the second side panel 6 connected. To the second side panel 6 is a third side panel 7 connected. In each connection the first connecting element 54, 64, 74, 74' of one side panel 5, 6, 7, 7' is connected to the second connecting element 55, 65, 75, 75' of a second side panel 5, 6, 7, 7' (see also Fig. 1). The edge covering panels 8 is connected to the third side panel 7, by the second connecting elements 75 on the third side panel 7.

Since the first, the second and the third side panels 5, 6, 7 all share some structural elements regarding the connection between two side panels, what is disclosed for the first side panel 5 may be applied to any other side panel 6, 7, 7'.

The connecting elements 11, 54, 64, 74, 74', 55, 65, 75, 75', 84 extend along the lateral sides of the elongated securing rail 12 or along the lateral sides of the side panels, in a direction corresponding with the elongation direction of either the securing rail 12 or a side panel. Arranged between the lateral sides of the elongated securing rail 12, where the elongated securing rail 12 is connected to the floor panel 13 and the side where the elongated securing rail 12 is connected to the first side panel 5, is an undercut groove 120. The undercut groove 120, faces the interior of the back space of cargo space 2, can be used for securing an item, module units or cargo in the back space or cargo space 2 of the service vehicle 1. Such undercut grooves 120 are known for the skilled person and will not be described in more detail. The elongated securing rail 12 is arranged with an adhesion surface 43, adapted to be applied with adhesives and placed on the inner floor 4 of the service vehicle 1. The adhesion surface 43 comprises a plurality of grooves for increasing the surface area of the adhesion surface and thus increasing the strength adhesive connection, between the elongated securing rail 12 and the inner floor 4 of the back space or cargo space 2 of the service vehicle 1.

The first, second and third side panels 5, 6, 7 each comprises hollow portions 44 arranged between the upper surface 58, and the bottom surface 57. The hollow portions 44 reduce the weight and material need of a side panel, and thus reduce the energy consumption of a service vehicle equipped with the floor panel system. The hollow portions 44 are arranged as rectangular volumes extending in the same direction as the direction the side panels extend in. The hollow portions 44 are designed such that the structural integrity of the side panel is maintained while still reducing the weight of the side panel as much as possible. Between two hollow portions 44 is a support wall 45. Such a support wall gives rigidity to the side panel 5, 6, 7 and enables the side panel 5, 6, 7 to support large loads applied to the top surfaces 58 of the side panels 5, 6, 7. The first and second side panels 5, 6 comprise two hollow portions 44 and the third side panel comprises three hollow portions 44. The number of hollow portions is dependent on the width of a side panel. Arranged to the top surface 58 of the side panels are ribs 46 comprising protrusions extending outwardly from the top surface 58 and extending in the same direction as the direction the side panels 5, 6, 7 extend in. The ribs 46 increase the friction between equipment, module units, and cargo placed onto the top surface of the side panels. Arranged perpendicular to the top and bottom surfaces 58, 57 of each side panel 5, 6, 7 is the first lateral side 51, 61, 71 and the second lateral side 52, 62, 72. The side panels 5, 6, 7 thus may be described as having a rectangular cross section defined by outer walls comprising two oppositely arranged top and bottom surfaces 58, 57 and two oppositely arranged, being perpendicular to the top and bottom surfaces 58, 57 lateral sides 51, 52, 61, 62, 71, 72.

Arranged to each first lateral side 51, 61, 71 of each side panel 5, 6, 7 is the first connecting element 54, 64, 74. Arranged to each second lateral side 52, 62, 72 of each side panel 5, 6, 7 is the second connecting element 55, 65, 75 (see also Fig. 1) The connecting elements 54, 64, 55, 65, between the second and the first side panel 5, 6 are designed in a similar way as the connecting elements 64, 65, 74, 75 of the third side panel 7 and the second side panel 6 and hence, only the connection between the first and the second side panel 6,7 will be described.

The first connecting element 64 of the second side panel 6 comprises a protrusion in the shape of an L arranged up-side down and connected to the first lateral side 61 of the second side panel 6 close to the top surface 58. The shorter side of the L-shaped protrusion forms an extension of the top surface 58 of the second side panel 6.

The other end of the L-shaped protrusion has a first locking portion 89, where a portion of the longer side of the L-shaped protrusion is extending in a direction towards the first lateral side 61 of the second side panel 6.

The shorter side of the L-shaped protrusion has a length Vmax, being the distance between the first lateral side 61 and the outwardly opposing inner wall surface 91 of the L-shaped protrusion. The first connection means 64 also comprise an opening width, Vmin, being the distance between the first lateral side 61 and the outwardly opposing inner wall surface 91 of the L-shaped protrusion of the first locking portion 89. The opening width Vmin is smaller than the length Vmax.

The first locking portion 89 is arranged to match with a second locking portion 79 of the second connecting element 55 of the first side panel 5 and locks the first connecting element 64 to the second connecting element 55 preventing the connection from being disconnected accidentally.

The second connecting element 55, is arranged to the second lateral side 52 of the second side panel 5, 6, 7. The second connecting element 55 of the first side panel 5 has a similar shape as the first connecting element 64 of the second side panel 6 by comprising a largely L-shaped protrusion extending from the second lateral side 52 of the first side panel 5. However the L-shaped protrusion of the second connecting elements 55 is not arranged up-side down. The shorter side of the L-shaped protrusion may be described as an extension to the bottom surface 57 of the first side panel 5. The second connecting element 55 comprises a second locking portion 79, as described before which is arranged to match the first locking portion 89. The second locking portion 79 of the second connecting element 55 comprises a first and a second locking member 77, 78. Both are parts of the longer side of the L-shaped protrusion, wherein the first locking member 77 is partly arranged in an angle towards the second lateral side 52 and the second locking member 78 is connected to the first locking member 77 such that the second locking member 78 is parallel to the L-shaped longer side of the L-shaped protrusion.

The shorter side of the L-shaped protrusion has a length Wmax, being the distance between the second lateral side 52 and the outwardly opposing inner wall surface 92 of the L-shaped protrusion. The second connection means 55 also comprise an opening width, Wmin, being the minimum perpendicular distance between the second lateral side 52 and the outwardly opposing inner wall surface 92 of the L-shaped protrusion at the second locking portion 79.

When the first connecting element 64 is engaging a second connecting element 55 the first locking member 77 is in contact with the first locking portion 89 of the first connecting element 64. The second locking member 78 of the second connecting element 55 is in contact with the middle part of the L-shaped protrusion of the first connecting element 64.

The connection between the first and second connecting elements is made by moving the connecting elements such that the first locking portion 89 of a first connecting element 64 is inserted into the second connecting element 55 of a second side panel 6, past the opening width, Wmin, of the second connecting element 55 of a first side panel 5. The first locking portion 89 is moved such that it partly fills the locking space 93 of the second connecting element 55 of the first side panel 5. The first locking portion 89 of a first connecting element 54, 64, 74 is resiliently and lockingly engaging the locking space 93 of a second connecting element 55, 65, 75.

The connection between the first and the second side panels 5, 6 is thus secured by the locking portions, locking members and locking space 77, 78, 79, 89, 93 and prevented from being unwantedly disconnected. The connection may further be described as a snap-lock connection. The bottom width Vmax and the opening width Vmin of the first connecting element 64 as well the bottom width Wmax and the opening width Wmin of a second connecting element 55 may be chosen such that the connection between the first and second connecting elements 64, 55 is made resilient. By resilient some elastic loading is present between the connecting elements 64, 55 after they are interconnected to each other. This minimizes movement in the connection due to vibrations. The widths may also be chosen such that there is some minimal play between the connection means 64, 55 after connection. The first connecting element and the second connecting element 64, 55 may be such that the connection is of a tongue and groove type.

The first side panel 5 has a width w1; the second side panel 6 has a width w2; and the third side panel 7 has a width w3. The widths define the width of the top surfaces 58 of a side panel 5, 6, 7. The widths are chosen such that maximum modularity is achieved when it comes to combining the widths w1, w2, w3 of the side panels 5, 6, 7 in order to cover as much of the inner floor 4, not covered by the main floor panel section 9, without the need to cut or trim the side panel in a longitudinal direction. Connected to the third side panel 7 is the edge covering panel, 8. The edge covering panel 8 comprises a body portion 83 comprising a connecting element 84 which is engaging the second connecting element 75 of the third side panel 7. The connecting element 84 of the edge covering panel is similar in design to the first connecting element 64 of the second side panel 6 and the second connecting element 75 of the third side panel 7 is similar in design as the second connecting element 55 of the first side panel 5. The edge covering panel 8 comprises an flexible portion 88, which is arranged to cover the gap between the third side panel 7 and a wall, or a rear wheel house 15, of a service vehicle 1 or to form a bridge between the third side panel 7 and the inner floor 4 of the back space or cargo space 2 of the service vehicle 1 (see Figs. 1-3) during use. The flexible portion 88 can be considered being a flexible tongue.

The side panels 5, 6, 7 are arranged to cover as much of the area of the inner floor 4 of the back space or cargo space 2 of service vehicle 1 that the main floor panel section 9 does not cover. The edge covering panel 8 in turn is arranged to cover the area of the inner floor 4 that is not covered by either the main floor panel section 9 or the side panel sections 14. For this purpose the edge covering panel 8 comprises the body portion 83 in a first material and the flexible portion 88 in a second material. The flexible portion 88 of the edge covering panel 8 comprises a body connecting groove 86 arranged to engage and enclose an overhang portion 87 of the body portion 83 of the edge covering panel 8. The flexible portion 88 is vulcanised or attached by adhesives to the body portion 83 of the edge covering panel 8. The edge covering panel 8 is not limited to be a panel, it may also be an edge covering strip 8. The flexible portion 88 of the edge covering rail 8 is shaped such that is pre-formed to extend downwardly in a direction which will be towards the inner floor 4 of the service vehicle 1 such that the flexible portion 88 of the edge covering panel 8 will be in contact with the inner floor 4 of a service vehicle 1 when the edge covering pane 8 is placed on to the inner floor 4 of the service vehicle 1. However, the flexible properties enable the flexible portion 88 to be arranged such that it instead is in contact with a side wall of the service vehicle.

The floor panel system is installed by first installing the main floor panel section 9. The main floor panel section 99 is arranged in the middle part of the service vehicle 1 in the rectangular area between the front wall 31, the rear opening and the two opposing rear wheel wells 15 of the back space or cargo space of the service vehicle (see Figs. 1, 2 and 3). When the main floor panel section 9 has been installed side panels 5, 6, 7 may be connected to the main floor panel section 9. The side panels 5, 6, 7 are installed in an incremental manner, by connecting additional side panels to already installed side panel, working outwardly from the main floor panel section 9 towards the side walls 3 of the vehicle 1. Side panels are cut into shorter lengths to fit around the rear wheel wells 15 or other objects in the way, covering as much of the inner floor 4 as possible. When the remaining gap between the side panel section 14 and the side walls 3, or the rear wheel wells 15, is small edge covering panels 8 may be connected to the side panel sections 9 such that the flexible portion 88 of the side panel section 14 is contacting the side walls 3, the inner floor 4 or the rear wheel wells 15 of the back space 2 of the service vehicle 1. In order to increase the securing of the side panels to the inner floor adhesives, or adhesive strips of tape may be used.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A floor panel system (99), adapted to be arranged on an inner floor (4) of a back space or cargo space (2) of a service vehicle (1), wherein said back space or cargo space (2) of said service vehicle (1) comprises at least two side walls (3), said floor panel system (99) comprising:
a substantially rectangular main floor panel section (9) comprising at least one main floor panel unit (9'), wherein said main floor panel section (9) is adapted to be arranged on said inner floor (4) at a distance (D) from at least one of said side walls (3) of said back space or cargo space (2) of said service vehicle (1), and
a first (5) and a second side panel (6), wherein said first side panel (5) comprises a first (51) and an opposite arranged second lateral side (52), wherein said first lateral side (51) of said first side panel (5) is adapted to be connected to said main floor panel section (9),
and said second side panel (6) comprises a first lateral side (61) adapted to be connected to said second lateral side (52) of said first side panel (5),
and said first lateral side (61) of said second side panel (6) comprises a first connecting element (64),
and said second lateral side (51) of said first side panel (5) comprises a second connecting element (55) matching said first connecting element (64) of said second side panel (6).

2. A floor panel system according to claim 1, wherein said first connecting element (64) comprises a locking protrusion (89), protruding outwardly from, and extending at least partly along said first lateral side (61) of said second side panel (6), adjacent a top surface (58), and
wherein said second connecting element (55) comprises a locking protrusion (79), protruding outwardly from, and extending at least partly along said second lateral side (52) of said first side panel (5), adjacent a bottom surface (57) of said first side panel .

3. A floor panel system according to claim 1, wherein said first connecting element (64) comprises a locking protrusion (89), protruding outwardly from, and extending at least partly along said first lateral side (61) of said second side panel (6), adjacent a bottom surface (57), and
wherein said second connecting element (55) comprises a locking protrusion (79), protruding outwardly from, and extending at least partly along said second lateral side (52) of said first side panel (5), adjacent a top surface (58) of said first side panel (5)

4. A floor panel system according to any preceding claim, wherein the width (w1, w2) of said first and said second side panel (5, 6) is the same or different.

5. A floor panel system according to any preceding claim, wherein the area of the inner floor (4), of said back space or cargo space (2) of said service vehicle (1), adapted to be covered by said substantially rectangular main floor panel section (9) is larger than the area of said inner floor (4) not being covered by said main floor panel section (9).

6. A floor panel system according to any preceding claim, further comprising an edge covering panel (8, 8'), adapted to be connected to said second lateral side (62) of said second side panel (6) or to a further side panel which is connected to said second lateral side (62) of said second side panel (6).

7. A floor panel system according to claim 1-5 wherein said second side panel (6) is an edge covering panel (8, 8').

8. A floor panel system according to claim 6-7 wherein said edge covering panel (8, 8') comprises a body portion (83) comprising a first connecting element (84), and a flexible portion (88), said flexible portion (88) being adapted to be in contact with said inner floor (4), a rear wheel house (15), or said one side wall (3) of said back space or cargo space (2) of said service vehicle (1).

9. A floor panel system according to, wherein said first and second side panels (5, 6) are made from a polymer material, such as a plastic.

10. A floor panel system according to, wherein said first and second side panels (5, 6), and said edge covering panel (8, 8'), are made from a polymer material, such as a plastic.

11. A floor panel system according to, wherein said flexible portion (88) of said edge covering panel (8, 8') is made from an elastomer, such as rubber.

12. A floor panel system according to claim 8, wherein said body portion (83) of said edge covering panel (8, 8') and/or said flexible portion (88) of said edge covering panel (8, 8') is made from an elastomer, such as rubber.

13. A floor panel system according to any preceding claim, wherein the side panels (5, 6, 7) have a length equal to the length of a main floor panel unit (9').

14. A service vehicle (1) comprising said floor panel system (99) according to any one of claim 1-12.
